# EUROPÄISCHE PATENTSCHRIFT

(11) **EP 2 971 963 B1**
(45) Veröffentlichungstag und Bekanntmachung des Hinweises auf die Patenterteilung: **06.05.2020**
(21) Anmeldenummer: 14709907.1
(22) Anmeldetag: 05.03.2014
(51) Int. Cl.: F23N 1/00, F23N 5/10, F16K 31/524

(54) **GASVENTILEINHEIT**
GAS VALVE UNIT
ENSEMBLE DE SOUPAPES À GAZ

(30) Priorität: 13.03.2013 EP 13290053
(43) Veröffentlichungstag der Anmeldung: 20.01.2016
(73) Patentinhaber: BSH Hausgeräte GmbH, 81739 München (DE)
(72) Erfinder: CADEAU, Christophe, F-67100 Strasbourg (FR); NAUMANN, Jörn, 77770 Durbach (DE)
(86) Internationale Anmeldenummer: PCT/EP2014/054250
(87) Internationale Veröffentlichungsnummer: WO 2014/139844

(56) Entgegenhaltungen:
- EP-A2- 0 818 655
- EP-A2- 1 821 017
- WO-A1-99/11956
- WO-A1-2004/063629
- WO-A2-2012/049049

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist.

Gasventileinheiten der genannten Art sind beispielsweise in den Druckschriften EP 0 818 655 A2 und WO 2004/063629 A1 beschrieben. Mit derartigen Gasventileinheiten kann der einen Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt und folglich die Größe des Gasvolumenstroms werden eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Bei den bekannten gattungsmäßigen Gasventileinheiten werden die Auf-Zu-Ventile einzeln elektromagnetisch betätigt. Hierzu ist jedem der Auf-Zu-Ventile ein eigener Elektromagnet zugeordnet, der das Auf-Zu-Ventil öffnet bzw. schließt. Die Ansteuerung der Elektromagnete erfolgt durch eine elektronische Steuereinheit. Diese elektronische Steuereinheit verarbeitet die von einer Bedienperson des Gaskochgeräts mittels eines elektrischen Bedienelements erzeugten Signale und steuert die Elektromagnete der Auf-Zu-Ventile entsprechend an.

Ferner zeigt die WO 2012/049049 A2 eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist, wobei die mindestens zwei Auf-Zu-Ventile durch Bewegen von zumindest einem Körper relativ zu den Auf-Zu-Ventilen mechanisch betätigbar sind.

Die WO 99/11956 A1 zeigt einen Gasbrenner mit konzentrisch angeordneten Ringbrennern. Jedem Ringbrenner ist ein Auf-Zu-Ventil zugeordnet. Die Auf-Zu-Ventile sind mit Hilfe eines Schiebers betätigbar.

Die EP 1 821 017 A2 beschreibt ein Mehrwegeventil mit einem Gehäuse, an dem eine als Druckleitung ausgebildete Zugangsleitung und mehrere Abgangsleitungen angeschlossen sind, wobei den Abgangsleitungen jeweils ein Ventilkörper zum Öffnen und Schließen der Abgangsleitungen zugeordnet ist und wobei die Ventilkörper mittels eines zentralen Betätigungselementes in eine Schließ- und Öffnungsstellung versetzbar sind.

Vor diesem Hintergrund besteht eine Aufgabe der folgenden Erfindung darin, eine verbesserte Gasventileinheit der eingangs genannten Art zur Verfügung zu stellen.

Diese Aufgabe wird erfindungsgemäß dadurch gelöst, dass der Ventilkörper einen Schulterbereich aufweist, welcher dazu ausgestaltet ist, ein beim Eingreifen des Mitnehmers in den Ansteuerbereich entstehendes Moment aufzunehmen.

Gemäß einem ersten Aspekt der Erfindung wird demnach eine Gasventileinheit zum Einstellen eines einem Gasbrenner eines Gasgeräts, insbesondere eines Gaskochgeräts, zugeführten Gasvolumenstroms vorgeschlagen, wobei die Gasventileinheit eine Mehrzahl N von Auf-Zu-Ventilen aufweist, wobei jedes Auf-Zu-Ventil einen bewegbaren Ventilkörper mit einem Absperrkörper und einem Ansteuerbereich, eine Schließfeder, die bei geschlossenem Auf-Zu-Ventil den Absperrkörper auf einen Ventilsitz drückt und dadurch eine Öffnung verschließt, und einen Mitnehmer aufweist. Dabei ist der Mitnehmer dazu ausgestaltet, den Absperrkörper zum Öffnen des Auf-Zu-Ventils mittels einer durch den in den Ansteuerbereich eingreifenden Mitnehmer bewirkten Kraft entgegen der Kraft der Schließfeder von dem Ventilsitz abzuheben. Der Ventilkörper hat einen Schulterbereich, welcher dazu ausgestaltet ist, ein beim Eingreifen des Mitnehmers in den Ansteuerbereich entstehendes Moment aufzunehmen. Die Absperrkörper der einzelnen Auf-Zu-Ventile sind auf einer Kreisbahn um eine Achse der Gasarmatur angeordnet und die Absperrkörper sind parallel zu dieser Achse bewegbar.

Die vorliegende Gasventileinheit ist dahingehend verbessert, dass ein beim Eingreifen des Mitnehmers in den Ansteuerbereich entstehendes Moment (Drehmoment) vermindert ist. Dabei wird insbesondere das vertikale Kippmoment durch den Schulterbereich (Schulter) am Ventilkörper vermindert, wenn der Mitnehmer am Hebelarm des Ventilkörpers wirkt. Bei diesem Kontakt wirkt zusätzlich zu dem vertikalen Kippmoment noch ein Verdrehmoment am Hebelarm des Ventilkörpers. Ohne die Schulter könnten die Auftriebmomente nicht abgefangen werden.

Die Betätigung der Gasventileinheit erfolgt, indem die Lage oder die räumliche Ausrichtung des Mitnehmers relativ zu den zu betätigenden Auf-Zu-Ventilen verändert wird. Zur Betätigung des jeweiligen Auf-Zu-Ventils ist die Position des Mitnehmers relativ zu dem Absperrkörper des jeweiligen Auf-Zu-Ventils veränderbar. Der Ansteuerbereich wird von dem Mitnehmer vorzugsweise dann betätigt, wenn sich der Ansteuerbereich oberhalb des Mitnehmers befindet. Andernfalls ist das Auf-Zu-Ventil mittels der auf den Absperrkörper wirkenden Kraft der Schließfeder geschlossen.

Wenn die Bewegung des Mitnehmers durch eine Bedienperson von Hand erfolgt, sind zum Schalten der Auf-Zu-Ventile keine elektrischen Komponenten erforderlich. Alternativ kann der Mitnehmer auch mittels eines beliebigen Stellglieds, beispielsweise eines Elektromotors, bewegt werden. Der Elektromotor wird dabei von einer elektrischen Steuereinheit angesteuert. Diese ermöglicht es, dieselbe Gasventileinheit wahlweise mechanisch durch die Bedienperson oder mittels eines elektrischen Stellglieds zu betätigen. Für das elektrische Stellglied kommt insbesondere ein Elektromotor, beispielsweise ein Schrittmotor, zum Einsatz. Das Stellglied wird dabei von einer elektrischen Steuereinheit angesteuert, beispielsweise in Abhängigkeit von den Signalen einer elektrischen Benutzerschnittstelle oder in Abhängigkeit von automatisierten Funktionen, beispielsweise einer automatisierten Leistungsregulierung oder einer Abschaltautomatik. Bei der Herstellung von Kochgeräten können baugleiche Gasventileinheiten sowohl mit mechanischen Benutzerschnittstellen, beispielsweise Drehknebeln, als auch mit elektrischen Benutzerschnittstellen, beispielsweise Touch-Sensoren, kombiniert werden.

Die Gasventileinheit ist insbesondere Teil eines handbetätigten Mehrfachstellgeräts, welches aus einem Ventilteil und einer adaptierten Zündsicherung besteht. In dem Ventilteil sind insbesondere ein Griff oder Drehknebel, Ventile, Düsen und Dichtungen integriert. Der Griff kann durch leichten Druck eingedrückt werden. Hierbei wird die Zündsicherung betätigt. Die Auf-Zu-Ventile werden in einem oder mehreren gasdichten Räumen durch ein bzw. mehrere federnde Bauteile auf Dichtungen gedrückt und verhindern somit den Durchfluss zu den dazugehörenden Öffnungen oder Dichtungsöffnungen. Die federnden Bauteile oder Federn finden ihren Gegenhalt an einer Ringscheibe, die von einem gasdicht angebrachten Deckel verschlossen ist.

Gemäß einer Ausführungsform ist der Schulterbereich ferner dazu ausgestaltet, einen Hub des Ventilkörpers in der Gasventileinheit zu begrenzen.

Durch die Hubbegrenzung des Ventilkörpers in der Gasventileinheit wird sichergestellt, dass der Ventilkörper bei abgenommener Abdeckplatte nicht aus dem Ventilgehäuse gedrückt werden kann.

Gemäß einer weiteren Ausführungsform ist der Ansteuerbereich als ein mit dem Schulterbereich verbundener Hebelarm ausgebildet. Zwischen dem Hebelarm und dem Absperrkörper des Ventilkörpers ist ein Einbauraum für die vorgespannte Schließfeder gebildet.

Gemäß einer weiteren Ausführungsform ist die Schließfeder zwischen dem Absperrkörper und dem Hebelarm positioniert. In dem oben erwähnten Einbauraum ist die Schließfeder mit einer vorbestimmten Vorspannung positioniert.

Gemäß einer weiteren Ausführungsform ist eine Druckplatte zur Positionierung der Schließfedern zwischen den Absperrkörpern und den Hebelarmen vorgesehen. Dabei ist die Druckplatte dazu eingerichtet, einen vorbestimmten Abstand zwischen dem jeweiligen Hebelarm und der jeweiligen Schließfeder bereitzustellen und die jeweilige Schließfeder vorzuspannen.

Die Druckplatte ist insbesondere als Ringscheibe mit Verdrehsicherung und Laschen zur Zentrierung der Federn ausgebildet.

Gemäß einer weiteren Ausführungsform ist der Abstand für ein Eingreifen des Mitnehmers in den Ansteuerbereich des Ventilkörpers vorbestimmt. Der Abstand ist so gewählt, dass der Mitnehmer in den Ansteuerbereich eingreifen kann und die Schließfeder ihre vorbestimmte Vorspannung erfährt.

Gemäß einer weiteren Ausführungsform hat die Druckplatte zumindest N Laschen zur Zentrierung der N Schließfedern. In dieser Ausführungsform ist für eine jede Schließfedereine Lasche vorgesehen.

Gemäß einer weiteren Ausführungsform hat die Druckplatte 2N Laschen zur Zentrierung der N Schließfedern, wobei jeweils zwei der 2N Laschen zur Zentrierung einer der N Schließfedern eingerichtet sind. In dieser Ausführungsform sind für eine jede Schließfeder zwei Laschen zur Zentrierung vorgesehen.

Die Absperrkörper der einzelnen Auf-Zu-Ventile sind auf einer Kreisbahn um eine Achse der Gasarmatur angeordnet und die Absperrkörper sind parallel zu dieser Achse bewegbar. Es entsteht hierdurch eine ringförmige Anordnung, bei der auch die Öffnungen der Ventildichtplatte auf einer Kreisbahn angeordnet sind. Die Bewegung der Absperrkörper erfolgt senkrecht zu der Ebene der Ventildichtplatte.

Gemäß einer weiteren Ausführungsform ist die Druckplatte als eine Ringscheibe mit zumindest N Laschen zur Zentrierung der N Schließfedern ausgebildet. Vorzugsweise ist eine Verdrehsicherung zur drehgesicherten Positionierung der Ringscheibe in der Gasventileinheit vorgesehen.

Gemäß einer weiteren Ausführungsform sind der Mitnehmer und die Auf-Zu-Ventile derart ausgeführt, dass in Abhängigkeit von der Position des Mitnehmers entweder kein Auf-Zu-Ventil oder genau ein Auf-Zu-Ventil oder genau zwei Auf-Zu-Ventile geöffnet sind. Die Größe des jeweiligen Körpers und die möglichen Positionen des Mitnehmers sind beispielsweise derart ausgelegt, dass der Mitnehmer höchstens ein Auf-Zu-Ventil zu einem Zeitpunkt öffnen kann. In der Nullposition des Griffschaft ist der Mitnehmer nicht über einem Auf-Zu-Ventil angeordnet.

Bevorzugt ist der Mitnehmer in Abhängigkeit eines Winkels vom Griffschaft über den in einer Reihe angeordneten Auf-Zu-Ventilen angeordnet.

Insbesondere ist der Mitnehmer bei einem ersten Winkel des Griffschafts der Gasarmatur über dem ersten Auf-Zu-Ventil der Reihe der Auf-Zu-Ventile angeordnet.

Wie oben ausgeführt, sind eine Mehrzahl N von Auf-Zu-Ventilen vorgesehen, wobei jedes Auf-Zu-Ventil einen bewegbaren Absperrkörper aufweist, der bei geschlossenem Auf-Zu-Ventil an einem Ventilsitz anliegt und dadurch eine Öffnung oder Ventilöffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des jeweiligen Auf-Zu-Ventils an dem Ventilsitz anliegt. Insbesondere haben die Öffnungen unterschiedliche Durchmesser. Bevorzugt haben die erste bis n-te Öffnungen abnehmende Durchmesser. Somit kann die zugeschaltete Zusatzlast je nach Drehwinkel vergrößert werden.

Vorzugsweise ist der Ventilsitz als im Wesentlichen ebene Fläche ausgeführt. Die ebene Fläche des Ventilsitzes bildet die Dichtfläche gegenüber dem jeweiligen Absperrkörper. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche müssen dann nur die Öffnungen eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Mit besonderem Vorteil sind die Ventilsitze der Mehrzahl der Auf-Zu-Ventile von einem gemeinsamen Bauteil gebildet. Dieses gemeinsame Bauteil kann als Ventildichtplatte ausgeführt sein und besitzt für jedes Auf-Zu-Ventil eine Öffnung oder Ventilöffnung und einen der Öffnung zugeordneten Ventilsitz. Insbesondere weist jedes Auf-Zu-Ventil eine Schließfeder auf, die bei geschlossenem Auf-Zu-Ventil den Absperrkörper auf den Ventilsitz drückt. Die Schließfeder erzeugt somit die Schließkraft des Auf-Zu-Ventils. Die Schließfeder stellt damit sicher, dass unabhängig von der Einbaulage der Gasventileinheit, z.B. auch dann, wenn die Gewichtskraft des Absperrkörpers der Kraft der Schließfeder entgegenwirkt, das Auf-Zu-Ventil sicher schließt.

Bevorzugt ist jeder Absperrkörper von einem im Wesentlichen zylindrischen Stößel gebildet. Der Absperrkörper weist an seinem dem Ventilsitz zugewandten Ende vorzugsweise eine ringförmige Dichtkante auf. Jeder Absperrkörper ist in einem Ventilkörper der Gasventileinheit axial bewegbar geführt.

Gemäß einer weiteren Ausführungsform ist der Mitnehmer als ein Teil einer Steuerscheibe ausgebildet, welche eine Drehmomentübertragungseinrichtung zum Übertragen des Drehmomentes vom Griffschaft der Gasventileinheit auf die Steuerscheibe aufweist.

Gemäß einer weiteren Ausführungsform weisen die Öffnungen unterschiedliche Durchmesser auf, wobei die erste bis N-te Öffnung einen der Reihe nach abnehmenden Öffnungsquerschnitt haben.

Gemäß einem zweiten Aspekt der Erfindung wird eine Gasarmatur vorgeschlagen, welche zumindest eine Gasventileinheit gemäß dem ersten Aspekt oder gemäß einer Ausführungsform des ersten Aspekts aufweist.

Gemäß einem dritten Aspekt der Erfindung wird ein Gasgerät, insbesondere ein Gasbackofen, vorgeschlagen, welches eine Gasarmatur gemäß dem zweiten Aspekt aufweist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert. Dabei zeigen:
- Fig. 1: eine Schnittansicht einer Gasarmatur mit einer Gasventileinheit,
- Fig. 2: eine Ansicht einer Dichtungsverbundplatte,
- Fig. 3: eine Schnittansicht der Gasarmatur nach Fig.1 mit eingedrücktem Griffschaft,
- Fig. 4: eine Detailansicht der Fig. 3,
- Fig. 5: eine Ansicht eines Ventilkörpers der Gasventileinheit nach Fig.1,
- Fig. 6: eine Ansicht von Unten der Gasventileinheit nach Fig.1,
- Fig. 7: eine Ansicht der -Ringscheibe der Gasventileinheit nach Fig.1,
- Fig. 8: eine Ansicht von Unten der Gasventileinheit nach Fig.6 mit eingesetzter Ringscheibe nach Fig. 7,
- Fig. 9: eine Draufsicht eines ersten Ausführungsbeispiels der Steuerscheibe,
- Fig. 10: eine Ansicht von Unten eines zweiten Anführungsbeispiels der Steuerscheibe,
- Fig. 11: eine Ansicht von Unten von der Gasventileinheit nach Fig.8 mit eingesetzter Steuerscheibe nach Fig. 10 in Geschlossenposition, und
- Fig. 12: eine Ansicht von Unten von der Gasventileinheit nach Fig.8 mit eingesetzter Steuerscheibe nach Fig. 10 in Offenposition.

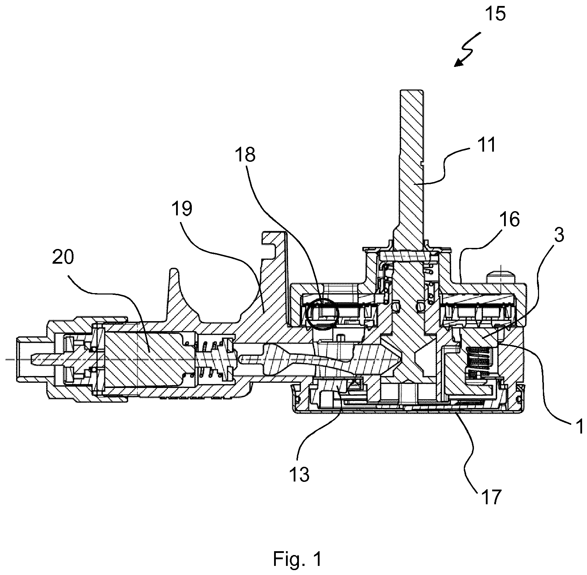

Die Fig. 1 bis 12 zeigen eine Gasarmatur 15, welche zum Einstellen eines einem Gasbrenner eines Gaskochgeräts zugeführten Gasvolumenstroms geeignet ist.

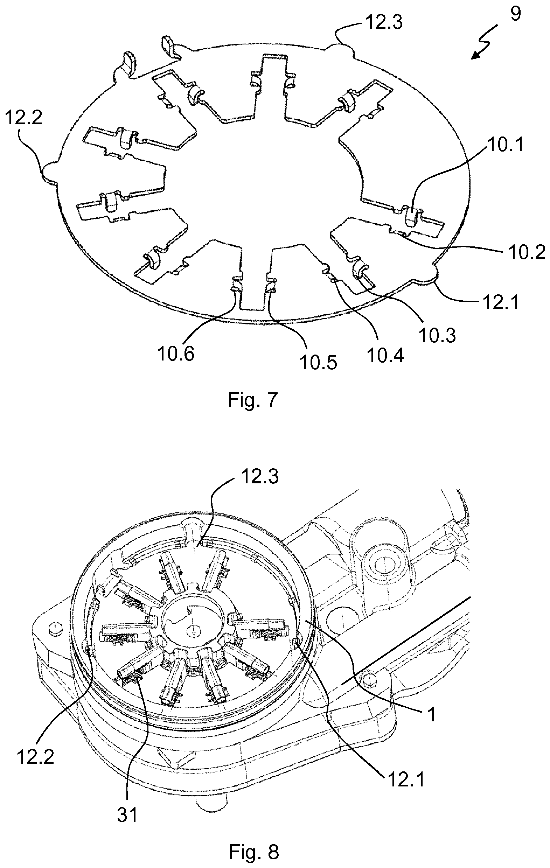

Die -Gasarmatur 15 hat einen Gaseingang, mit dem sie beispielsweise an eine Hauptgasleitung eines Gaskochgeräts angeschlossen ist. An dem Gaseingang steht das zur Verbrennung vorgesehene Gas mit einem konstanten Druck, von beispielsweise 20 mbar oder 50 mbar. An einem Gasausgang der Gasarmatur 15 wird eine beispielsweise zu einem Gasbrenner des Gaskochgeräts führende Gasleitung angeschlossen. Der Gaseingang ist über einen Gasausgangsraum der Gasarmatur 15 mit der Eingangsseite der im vorliegenden Ausführungsbeispiel neun Auf-Zu-Ventilen 2.1-2.9 (siehe Fig. 8) verbunden. Durch Öffnen der Auf-Zu-Ventile 2.1-2.9 ist der Gaseingang jeweils mit dem Gasausgangsraum verbunden.

Jedes Auf-Zu-Ventil 2.1-2.9 hat einen bewegbaren Ventilkörper 3 mit einem Absperrkörper 4 und einem Ansteuerbereich 5, eine Schließfeder 6.1-6.9, die bei geschlossenem Auf-Zu-Ventil 2.1-2.9 den Absperrkörper 4 auf einen Ventilsitz drückt und dadurch eine Öffnung verschließt, und einen Mitnehmer 7, welcher dazu ausgestaltet ist, den Absperrkörper 4 zum Öffnen des Auf-Zu-Ventils 2.1-2.9 mittels einer durch den in den Ansteuerbereich 5 eingreifenden Mitnehmer 7 bewirkten Kraft entgegen der Kraft der Schließfeder 6.1-6.9 von dem Ventilsitz abzuheben. Dabei sind der Mitnehmer 7 und die Auf-Zu-Ventile 2.1 bis 2.9 derart ausgeführt, dass in Abhängigkeit von der Position des Mitnehmers 7 entweder kein Auf-Zu-Ventil Ventile 2.1 bis 2.9 oder genau ein Auf-Zu-Ventil Ventile 2.1 bis 2.9 oder genau zwei Auf-Zu-Ventile Ventile 2.1 bis 2.9 geöffnet ist. Der Absperrkörper 4 ist beispielsweise von einem im Wesentlichen zylindrischen Stößel gebildet. Die Ventilsitze der Auf-Zu-Ventile 2.1 bis 2.9 sind vorzugsweise von einem gemeinsamen Bauteil gebildet.

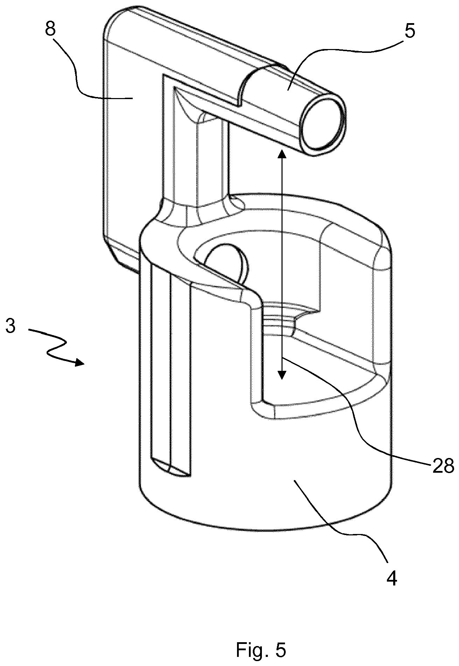

Dabei weist der Ventilkörper 3 einen Schulterbereich 8 auf, welcher dazu ausgestaltet ist, ein beim Eingreifen des Mitnehmers 7 in den Ansteuerbereich (5 entstehendes Moment aufzunehmen (siehe Fig. 5).

Hierzu ist im jeweiligen Auf-Zu-Ventil 2.1 bis 2.9 eine Öffnung in einer Düsenplatte zugeordnet. Bei geöffnetem Auf-Zu-Ventil 2.1 bis 2.9 kann Gas von dem Gaseingangsraum zu dem Gasausgangsraum gelangen. Im Detail zeigt die Fig. 1 eine Schnittansicht der Gasarmatur 15 mit der Gasventileinheit 1.

Die Gasarmatur 15 setzt sich im Wesentlichen aus der Gasventileinheit 1, dem Ventilgehäuse 19, dem Magneteinsatz 20, der Abdeckplatte 16 mit der Dichtungsverbundplatte 18, dem Griffschaft 11, den Ventilkörpern 3, der Ringscheibe, der Steuerscheibe 13 und der Ventilgehäuseabdeckung 17 zusammen.

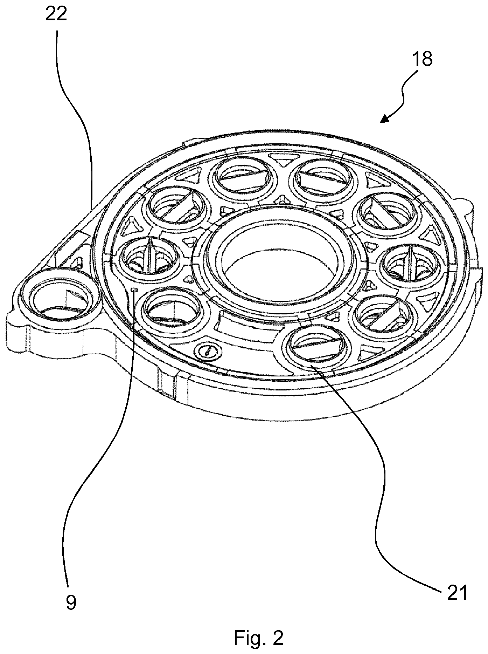

Die Dichtungsverbundplatte 18 besteht gemäß Fig. 2 aus neun Dichtsitzen 21, der Druckplatte 9 und der unteren Gasverteilungsplatte 22. Die Dichtsitze 21 sind beispielsweise als einzelne Silikon-Ringdichtflächen ausgebildet. Die Druckplatte 9 ist beispielsweise als ein Kunststoffträger gebildet. Die untere Gasverteilungsplatte 22 ist beispielsweise - wie die Dichtsitze 21 - als einzelne Silikon-Ringdichtflächen ausgebildet.

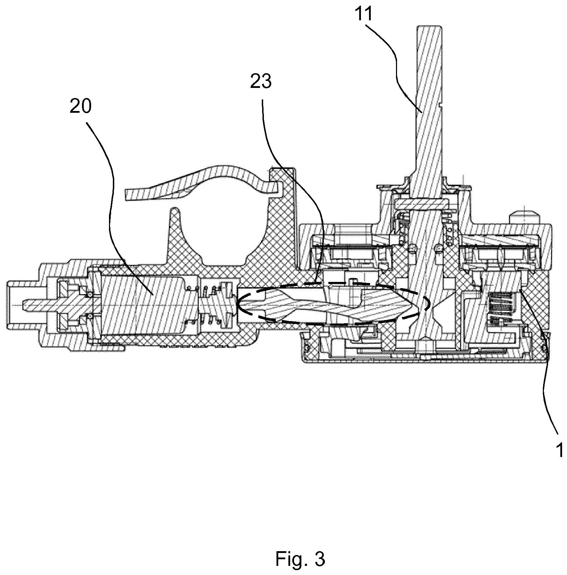

Der Griffschaft 11 ist drehbar und kann durch leichten Druck eingedrückt werden. Hierzu zeigt die Fig. 3 eine Schnittansicht der Gasarmatur 15 der Fig. 1 mit eingedrücktem Griffschaft 11. Beim Eindrücken des Griffschaftes 11 wird der Magneteinsatz 20 über ein Umlenksystem 23 betätigt. Die Dichtungsverbundplatte 18 liegt auf der dem Griffschaft 11 zugewandten Seite und ist in einer Abdeckung 16 integriert, wobei die Dichtungsverbundplatte 18 zur entgegengesetzten Seite des Griffschaftes 11 weist.

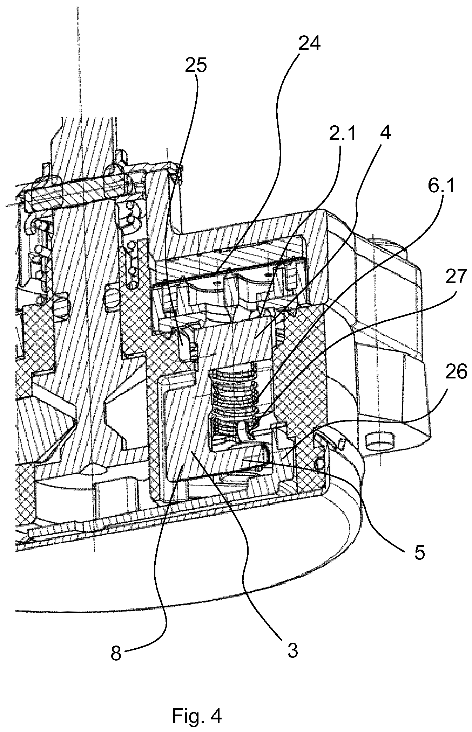

Die Ventilkörper 3 werden in einem gasförmigen Ringraum durch die Schließfedern 6.1 bis 6.9 auf die Silikon-Ringdichtflächen der Dichtungsverbundplatte 18 gedrückt und verhindern somit den Durchfluss zu den dazu gehörenden Düsenöffnungen in der darüber liegenden Düsenplatte 9 (siehe Fig. 4). Die Ventilkörper 3 durchdringen die Ringscheibe 26 mit ihrem Schulterbereich 8. Hierzu zeigt die Fig. 4 eine Detailansicht der Fig. 3.

Weiter sind in der Fig. 4 die Düsenplatte 24, der gasführende Raum 25, die Ringscheibe 26 und eine Zentrierung 27 für die Schließfeder 6.1 detailliert dargestellt. Der Ventilkörper 3 ist mit seinem Schulterbereich 8 und seinem Hebelarm 5 zur Hubbegrenzung und zur Kompensation von Momenten, insbesondere Kippmomenten, geeignet.

Hierzu zeigt die Fig. 5 eine Ansicht eines Ventilkörpers 3 der Gasventileinheit 1 nach den Fig. 1 und 3. Der Ventilkörper 3 hat den Absperrkörper 4, den mit dem Absperrkörper 4 verbundenen Schulterbereich 8 und den mit dem Schulterbereich 8 verbundenen Hebelarm 5. Das Bezugszeichen 28 der Fig. 5 zeigt den Einbauraum für die vorgespannte Schließfeder 6.1. Durch die vorliegende Gestaltung der Ventilkörper 3 mit dem Schulterbereich 8 wird vorteilhafterweise verhindert, dass die Ventilkörper 3 bei abgenommener Abdeckplatte 16 aus dem Ventilgehäuse 19 gedrückt werden können.

Ferner verhindert der Schulterbereich 8 am Ventilkörper 3 auch das vertikale Kippmoment, wenn der Mitnehmer 7 an dem Hebelarm 5 des Ventilkörpers 3 wirkt. Bei diesem Kontakt wirkt zusätzlich zu dem vertikalen Kippmoment noch ein Verdrehmoment an dem Hebel am Fuß des Ventilkörpers 3. Der Schulterbereich 8 (Schulter) fängt die auftretenden Momente demnach ab.

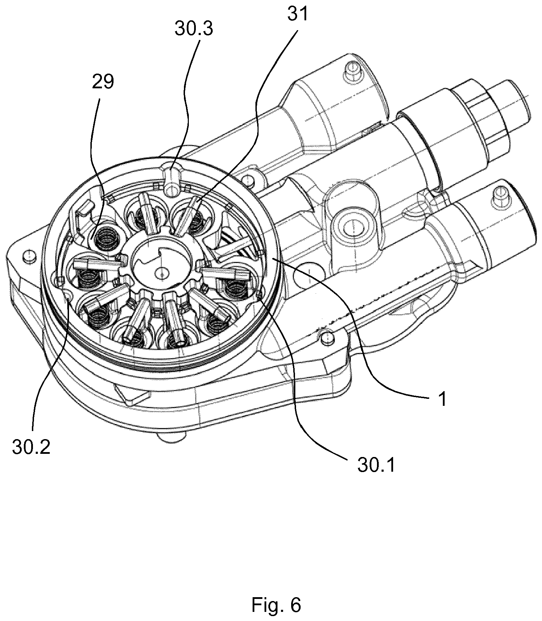

Je nach Ausführungsvariante wird eine bestimmte Anzahl von Ventilkörpern 3 mit Federn 6.1-6.9 in das Ventilgehäuse 19 gefügt. Hierzu zeigt die Fig. 6 eine Ansicht von unten der Gasarmatur 15 nach Fig. 1. Ohne Einschränkung der Allgemeinheit hat die Gasarmatur 15 der Fig. 6 neun Ventilkörper 31 mit vorgespannten Federn. Aus Gründen der Übersichtlichkeit ist nur ein Ventilkörper in der Fig. 6 mit einem Bezugszeichen 31 versehen. Das Bezugszeichen 29 in der Fig. 6 zeigt eine besondere Ausführung für eine Mehrkreisarmatur. Die Bezugszeichen 30.1 bis 30.3 illustrieren Räume für Verdrehsicherungen der Ringscheibe 26.

Hierzu zeigt die Fig. 7 eine Ansicht der Ringscheibe 26 der Gasarmatur 15 nach Fig. 1. Die Ringscheibe 26 ist - zur Positionierung der Schließfedern 6.1-6.9 zwischen den Absperrkörpern 4 und den Hebelarmen 5 vorgesehen. Die Ringscheibe 26 ist dabei dazu eingerichtet, einen vorbestimmten Abstand zwischen dem jeweiligen Hebelarm 5 und der jeweiligen Schließfeder 6.1-6.9 bereitzustellen und die jeweilige Schließfeder 6.1-6.9 vorzuspannen. Hierzu zeigt die Fig. 8 eine Ansicht von unten der Gasarmatur 15 nach Fig. 6 mit eingesetzter Ringscheibe 26 nach Fig. 7.

Des Weiteren hat die Ringscheibe 26 achtzehn Laschen 10.1-10.18 zur Zentrierung der neun Schließfedern 6.1-6.9. Aus Gründen der Übersichtlichkeit sind in der Fig. 7 nur sechs Laschen 10.1-10.6 mit Bezugszeichen versehen. Ferner hat die Ringscheibe 26 eine Verdrehsicherung 12.1-12.3 zur drehgesicherten Positionierung der Ringscheibe 26 in dem Ventilgehäuse 19. Dies ist in Fig. 8 detailliert dargestellt. Hierbei sind die Verdrehsicherungen 12.1-12.3 der Ringscheibe 26 in die dafür vorgesehenen Räume 30.1 bis 30.3 eingefügt.

Gemäß Fig. 8 liegt die Ringscheibe 26 auf den vorgespannten Federn 6.1-6.9 auf, wobei die aufgestellten Laschen 10.1-10.18 an der Ringscheibe 26 in die Federn 6.1-6.9 eintauchen und diese fixieren.

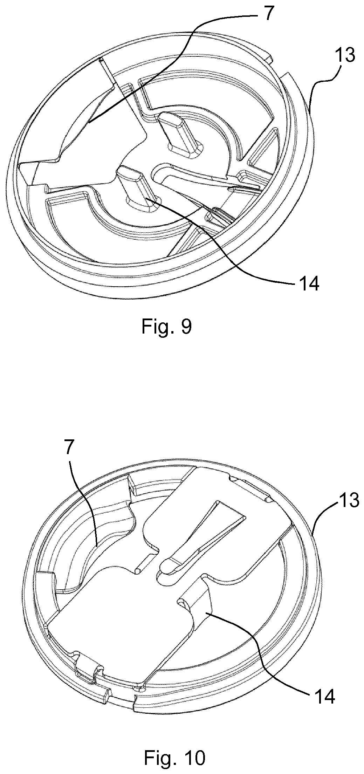

Damit sich ein entsprechender Druck bei den Ventilkörpern 3 aufbauen kann, wird die Ringscheibe 26 gemäß dem vorbestimmten Abstand nach unten gedrückt. Dabei lösen sich die vorgespannten Schließfedern 6.1-6.9 von den Hebelarmen 5 der Ventilkörper 3. In dieser Position werden die Ringscheibe 26 und das Ventilgehäuse 19 gemäß der Fig. 8 miteinander verstemmt. Als Nächstes wird eine Steuerscheibe 13 montiert, welche den Mitnehmer 7 aufweist (siehe Fig. 9 und 10).

Der Mitnehmer 7 ist in Abhängigkeit eines Winkels des Griffschaftes 11 der Gasarmatur 15 über den kreisförmig angeordneten Auf-zu-Ventilen 2.1-2.9 angeordnet. Die Stege 14 wirken zur Übertragung des Drehmoments von dem Griffschaft 11 der Gasarmatur 15 auf die Steuerscheibe 13. Dabei tauchen die Stege 14 in die Aufnahmen des Griffschafts 11 ein und übertragen das Drehmoment auf die Steuerscheibe 13, damit die Hubbewegungen umgesetzt werden können. In der Fig. 9 ist eine einteilige Steuerscheibe 13 dargestellt. Es ist aber auch möglich, die Steuerscheibe 13 mehrteilig auszuführen. Ein Beispiel hierzu findet sich in der Fig. 10.

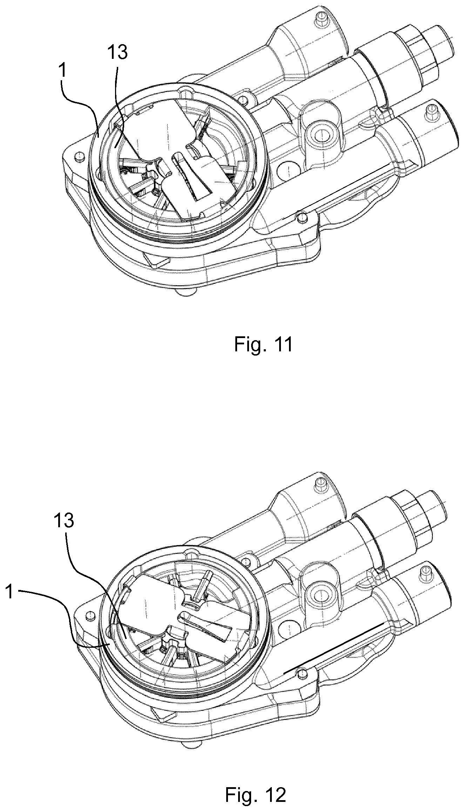

Die Steuerscheibe, beispielsweise nach Fig. 9, wird mit den Stegen 14 voran in das Ventilgehäuse 19 gelegt, so dass der Mitnehmer 7 zwischen dem ersten und letzten Ventilkörper 3 liegt (siehe Fig. 11). Bei drehender Betätigung des Griffschafts 11 gleitet die Steuerscheibe 13 auf der Ringscheibe, so dass die Steuerscheibe 13 mit dem Mitnehmer 7 Kontakt mit einem bzw. zwei Ventilkörper-Hebelarmen 5 bekommt und diese öffnet oder schließt (siehe Fig. 12).

Die mechanisch schaltende Gasarmatur 15 kann von Hand bedient werden. Eine Elektronik ist nicht erforderlich, ein motorischer Antrieb kann aber eingesetzt werden.

Durch die vorliegende Anordnung ist ein Drehweg von ca. 320° bereitgestellt. -. Die vorliegende Gasarmatur ist für jede Gasart, auch für Flüssiggas, einsetzbar.

Ferner gibt es Varianten der Gasarmatur, bei welchen in den einzelnen Schaltstufen variierende Gasmengen gegenüber einer Grundlast erreicht werden können. In Abhängigkeit der Ausgestaltung der Öffnungsquerschnitte ist auch eine stetig ansteigende Gasmenge gegenüber der Grundlast darstellbar. Des Weiteren ist selbst ein Zickzackprofil für die bereitgestellte Gasmenge möglich.

Bei den Schaltvorgängen der Auf-Zu-Ventile ist kein Fett erforderlich, so dass es zu keiner Verschiebung der Schaltpunkte kommen kann.

Ferner kann auch bei einigen Ausführungsformen der Gasarmatur der Aufbau der Auf-Zu-Ventile ab der Dichtungsverbundplatte in Strömungsrichtung gesehen sehr einfach gestaltet werden, da eine Doppellochung der Düsenplatte und weitere Gasverteilungsplatten entfallen können.

### Bezugszeichenliste

- 1: Gasventileinheit
- 2.1-2.9: Auf-zu-Zu-Ventil
- 3: Ventilkörper
- 4: Absperrkörper
- 5: Ansteuerbereich
- 6.1-6.9: Schließfeder
- 7: Mitnehmer
- 8: Schulterbereich
- 9: Druckplatte
- 10.1-10.18: Lasche
- 11: Griffschaft
- 12.1-12.3: Verdrehsicherung
- 13: Steuerscheibe
- 14: Steg
- 15: Gasarmatur
- 16: Abdeckplatte
- 17: Ventilgehäuseabdeckung
- 18: Dichtungsverbundplatte
- 19: Ventilgehäuse
- 20: Magneteinsatz
- 21: Dichtsitz
- 22: Gasverteilungsplatte
- 23: Umlenksystem
- 24: Düsenplatte
- 25: gasführender Raum
- 26: Ringscheibe
- 27: Zentrierung für Schließfeder
- 28: Einbauraum für vorgespannte Schließfeder
- 29: Ausführung einer Mehrkreisarmatur
- 30.1-30.3: Raum für Verdrehsicherung
- 31: Ventilkörper mit vorgespannter Feder

## Patentansprüche

1. Gasventileinheit (1) zum Einstellen eines einem Gasbrenner eines Gasgerätes, insbesondere eines Gaskochgeräts, zugeführten Gasvolumenstroms, wobei die Gasventileinheit (1) eine Mehrzahl N von Auf-Zu-Ventilen (2.1-2.9) aufweist, wobei jedes Auf-Zu-Ventil (2.1-2.9) einen bewegbaren Ventilkörper (3) mit einem Absperrkörper (4) und einem Ansteuerbereich (5), eine Schließfeder (6.1-6.9), die bei geschlossenem Auf-Zu-Ventil (2.1-2.9) den Absperrkörper (4) auf einen Dichtsitz (21) drückt und dadurch eine Öffnung verschließt, und einen Mitnehmer (7) aufweist, welcher dazu ausgestaltet ist, den Absperrkörper (4) zum Öffnen des Auf-Zu-Ventils (2.1-2.9) mittels einer durch den in den Ansteuerbereich (5) eingreifenden Mitnehmer (7) bewirkten Kraft entgegen der Kraft der Schließfeder (6.1-6.9) von dem Dichtsitz (21) abzuheben, wobei die Absperrkörper (4) der einzelnen Auf-Zu-Ventile (2.1-2.9) auf einer Kreisbahn um eine Achse der Gasventileinheit (1) angeordnet sind und die Absperrkörper (4) parallel zu dieser Achse bewegbar sind, **dadurch gekennzeichnet, dass** der Ventilkörper (3) einen Schulterbereich (8) aufweist, welcher dazu ausgestaltet ist, ein beim Eingreifen des Mitnehmers (7) in den Ansteuerbereich (5) entstehendes Moment aufzunehmen.

2. Gasventileinheit nach Anspruch 1, **dadurch gekennzeichnet, dass** der Schulterbereich (8) ferner dazu ausgestaltet ist, einen Hub des Ventilkörpers (3) in der Gasventileinheit (1) zu begrenzen.

3. Gasventileinheit nach Anspruch 1 oder 2, **dadurch gekennzeichnet, dass** der Ansteuerbereich (5) als ein mit dem Schulterbereich (8) verbundener Hebelarm ausgebildet ist.

4. Gasventileinheit nach Anspruch 3, **dadurch gekennzeichnet, dass** die Schließfeder (6.1-6.9) zwischen dem Absperrkörper (4) und dem Hebelarm (5) positioniert ist.

5. Gasventileinheit nach Anspruch 4, **dadurch gekennzeichnet, dass** eine Ringscheibe (26) zur Positionierung der Schließfedern (6.1-6.9) zwischen den Absperrkörpern (4) und den Hebelarmen (5) vorgesehen ist, welche dazu eingerichtet ist, einen vorbestimmten Abstand zwischen dem jeweiligen Hebelarm (5) und der jeweiligen Schließfeder (6.1-6.9) bereitzustellen und die jeweilige Schließfeder (6.1-6.9) vorzuspannen.

6. Gasventileinheit nach Anspruch 5, **dadurch gekennzeichnet, dass** der Abstand für ein Eingreifen des Mitnehmers (7) in den Ansteuerbereich (5) des Ventilkörpers (3) vorbestimmt ist.

7. Gasventileinheit nach Anspruch 5 oder 6, **dadurch gekennzeichnet, dass** die Ringscheibe (26) zumindest N Laschen (10.1-10.18) zur Zentrierung der N Schließfedern (6.1-6.9) aufweist.

8. Gasventileinheit nach Anspruch 7, **dadurch gekennzeichnet, dass** die Ringscheibe (26) 2N Laschen (10.1-10.18) zur Zentrierung der N Schließfedern (6.1-6.9) aufweist, wobei jeweils zwei der 2N Laschen (10.1-10.9) zur Zentrierung einer der N Schließfedern (6.1-6.9) eingerichtet sind.

9. Gasventileinheit nach einem der Ansprüche 1 bis 8, **dadurch gekennzeichnet, dass** die Achse von einem Griffschaft (11) der Gasventileinheit (1) gebildet ist.

10. Gasventileinheit nach Anspruch 8, **dadurch gekennzeichnet, dass** die Ringscheibe (26) mit zumindest N Laschen (10.1-10.18) zur Zentrierung der N Schließfedern (6.1-6.9) und mit zumindest einer Verdrehsicherung (12.1-12.3) zur drehgesicherten Positionierung der Ringscheibe (26) in der Gasarmatur (15) ausgebildet ist.

11. Gasventileinheit nach einem der Ansprüche 1 bis 10, **dadurch gekennzeichnet, dass** der Mitnehmer (7) und die Auf-Zu-Ventile (2.1-2.9) derart ausgeführt sind, dass in Abhängigkeit von der Position des Mitnehmers (7) entweder kein Auf-Zu-Ventil (2.1-2.9) oder genau ein Auf-Zu-Ventil (2.1-2.9) oder genau zwei Auf-Zu-Ventile (2.1-2.9) geöffnet sind.

12. Gasventileinheit nach Anspruch 11, **dadurch gekennzeichnet, dass** der Mitnehmer (7) in Abhängigkeit eines Winkels des Griffschaftes (11) der Gasventileinheit (1) über den kreisförmig angeordneten Auf-Zu-Ventilen (2.1-2.9) angeordnet ist.

13. Gasventileinheit nach einem der Ansprüche 9 bis 12, **dadurch gekennzeichnet, dass** der Mitnehmer (7) als ein Teil einer Steuerscheibe (13) ausgebildet ist, welche eine Drehmomentübertragungseinrichtung (14) zum Übertragen des Drehmomentes von dem Griffschaft (11) der Gasventileinheit (1) auf die Steuerscheibe (13) aufweist.

14. Gasventileinheit nach einem der Ansprüche 1 bis 13, **dadurch gekennzeichnet, dass** Öffnungen in einer Düsenplatte (24) der Gasventileinheit (1) unterschiedliche Durchmesser aufweisen, wobei die erste bis N-te Öffnung einen der Reihe nach abnehmenden Öffnungsquerschnitt haben.

15. Gasarmatur (15) mit zumindest einer Gasventileinheit (1) nach einem der Ansprüche 1 bis 14.

16. Gasgerät, insbesondere Gasbackofen, welches eine Gasarmatur nach Anspruch 15 aufweist.

## Claims

1. Gas valve unit (1) for setting a gas volume flow fed to a gas burner of a gas device, in particular a gas cooking appliance, wherein the gas valve unit (1) has a plurality N of on-off valves (2.1-2.9), wherein each on-off valve (2.1-2.9) has a movable valve body (3) with a shut-off body (4) and an activation area (5), a closing spring (6.1-6.9) which, when the on-off valve (2.1-2.9) is closed, pushes the shut-off body (4) onto a sealing seat (21) and through this closes an opening, and has a driver (7) which is embodied to lift the shut-off body (4) away from the sealing seat (21) for opening the on-off valve (2.1-2.9) by means of a force caused by the driver (7) engaging into the activation area (5) against the force of the closing spring (6.1-6.9), wherein the shut-off bodies (4) of the individual on-off valves (2.1-2.9) are disposed on a circular track around an axis of the gas valve unit (1) and the shut-off bodies (4) are able to be moved parallel to this axis, **characterised in that** the valve body (3) has a shoulder area (8) which is embodied to accept a torque arising on engagement of the driver (7) into the activation area (5).

2. Gas valve unit according to claim 1, **characterised in that** the shoulder area (8) is further embodied to restrict a lift of the valve body (3) in the gas valve unit (1).

3. Gas valve unit according to claim 1 or 2, **characterised in that** the activation area (5) is embodied as a lever arm connected with the shoulder area (8).

4. Gas valve unit according to claim 3, **characterised in that** the closing spring (6.1-6.9) is positioned between the shut-off body (4) and the lever arm (5).

5. Gas valve unit according to claim 4, **characterised in that** a ring-shaped disc (26) is provided for positioning the closing springs (6.1-6.9) between the shut-off bodies (4) and the lever arms (5) which is configured to provide a predetermined distance between the respective lever arm (5) and the respective closing spring (6.1-6.9) and to pre-tension the respective closing spring (6.1-6.9).

6. Gas valve unit according to claim 5, **characterised in that** the distance is predetermined for engagement of the driver (7) into the activation area (5) of the valve body (3).

7. Gas valve unit according to claim 5 or 6, **characterised in that** the ring-shaped disc (26) has at least N tabs (10.1-10.18) for centring the N closing springs (6.1-6.9).

8. Gas valve unit according to claim 7, **characterised in that** the ring-shaped disc (26) has 2N tabs (10.1-10.18) for centring the N closing springs (6.1-6.9), wherein two of the 2N tabs (10.1-10.9) are configured in each case for centring one of the N closing springs (6.1-6.9).

9. Gas valve unit according to one of claims 1 to 8, **characterised in that** the axis is formed by a grip shaft (11) of the gas valve unit (1).

10. Gas valve unit according to claim 8, **characterised in that** the ring-shaped disc (26) is embodied with at least N tabs (10.1-10.18) for centring the N closing springs (6.1-6.9) and with at least one torsion proofing device (12.1-12.3) for torsion-proof positioning of the ring-shaped disc (26) in the gas valve (15).

11. Gas valve unit according to one of claims 1 to 10, **characterised in that** the driver (7) and the on-off valves (2.1-2.9) are embodied such that, depending on the position of the driver (7), either no on-off valve (2.1-2.9) or precisely one on-off valve (2.1-2.9) or precisely two on-off valves (2.1-2.9) are opened.

12. Gas valve unit according to claim 11, **characterised in that** the driver (7) is disposed, as a function of an angle of the grip shaft (11) of the gas valve unit (1), above the circular arrangement of on-off valves (2.1-2.9).

13. Gas valve unit according to one of claims 9 to 12, **characterised in that** the driver (7) is embodied as a part of the control disc (13), which has a torque transmission device (14) for transmitting the torque from the grip shaft (11) of the gas valve unit (1) to the control disc (13).

14. Gas valve unit according to one of claims 1 to 13, **characterised in that** the openings in the nozzle plate (24) of the gas valve unit (1) have different diameters, wherein the first to Nth opening have an opening cross section decreasing in series.

15. Gas valve (15) with at least one gas valve unit (1) according to one of claims 1 to 14.

16. Gas appliance, especially a gas oven, which has a gas valve according to claim 15.

## Revendications

1. Unité de vannes à gaz (1) destinée au réglage d'un débit volumique de gaz amené à un brûleur à gaz d'un appareil à gaz, notamment d'un appareil de cuisson au gaz, l'unité de vannes à gaz (1) présentant une pluralité N de vannes tout ou rien (2.1 - 2.9), chaque vanne tout ou rien (2.1 - 2.9) présentant un corps de vanne (3) déplaçable doté d'un corps de blocage (4) et d'une zone de commande (5), présentant un ressort de fermeture (6.1 - 6.9) qui, lorsque la vanne tout ou rien (2.1 - 2.9) est fermée, presse le corps de blocage (4) sur un siège d'étanchéité (21) et obture ainsi une ouverture, et présentant un entraîneur (7) lequel est conçu pour soulever le corps de blocage (4) du siège d'étanchéité, dans le but d'ouvrir la vanne tout ou rien (2.1 - 2.9), à l'opposé de la force du ressort de fermeture (6.1 - 6.9) au moyen d'une force agissant en raison de l'entraîneur (7) ayant prise dans la zone de commande (5), les corps de blocage (4) de chacune des vannes tout ou rien (2.1 - 2.9) étant disposés sur un orbite autour d'un axe de l'unité de vannes à gaz (1) et les corps de blocage (4) étant déplaçables parallèlement à cet axe, **caractérisée en ce que** le corps de vanne (3) présente une zone d'épaulement (8) qui est réalisée pour capter un couple se produisant lors de la prise de l'entraîneur (7) dans la zone de commande (5).

2. Unité de vannes à gaz selon la revendication 1, **caractérisée en ce que** la zone d'épaulement (8) est en outre conçue pour limiter une course du corps de vanne (3) dans l'unité de vannes à gaz (1).

3. Unité de vannes à gaz selon la revendication 1 ou 2, **caractérisée en ce que** la zone de commande (5) est réalisée en tant qu'un bras de levier relié à la zone d'épaulement (8).

4. Unité de vannes à gaz selon la revendication 3, **caractérisée en ce que** le ressort de fermeture (6.1 - 6.9) est positionné entre le corps de blocage (4) et le bras de levier (5).

5. Unité de vannes à gaz selon la revendication 4, **caractérisée en ce qu'**une rondelle annulaire (26) destinée au positionnement des ressorts de fermeture (6.1 - 6.9) entre les corps de blocage (4) et les bras de levier (5) est ménagée, laquelle est conçue pour fournir un écart prédéterminé entre le bras de levier (5) respectif et le ressort de fermeture (6.1 - 6.9) respectif et précontraindre le ressort de fermeture (6.1 - 6.9) respectif.

6. Unité de vannes à gaz selon la revendication 5, **caractérisée en ce que** l'écart est prédéterminé pour une prise de l'entraîneur (7) dans la zone de commande (5) du corps de vanne (3).

7. Unité de vannes à gaz selon la revendication 5 ou 6, **caractérisée en ce que** la rondelle annulaire (26) présente au moins N languettes (10.1 - 10.18) pour le centrage des N ressorts de fermeture (6.1 - 6.9).

8. Unité de vannes à gaz selon la revendication 7, **caractérisée en ce que** la rondelle annulaire (26) présente 2N languettes (10.1 - 10.18) pour le centrage des N ressorts de fermeture (6.1 - 6.9), respectivement deux des 2N languettes (10.1 - 10.9) étant conçues pour le centrage de l'un des N ressorts de fermeture (6.1 - 6.9).

9. Unité de vannes à gaz selon l'une quelconque des revendications 1 à 8, **caractérisée en ce que** l'axe est formé par une tige de prise (11) de l'unité de vannes à gaz (1).

10. Unité de vannes à gaz selon la revendication 8, **caractérisée en ce que** la rondelle annulaire (26) est réalisée avec au moins N languettes (10.1 - 10.18) pour le centrage des N ressorts de fermeture (6.1 - 6.9) et avec au moins un dispositif anti-rotation (12.1 - 12.3) pour le positionnement sécurisé contre la rotation de la rondelle annulaire (26) dans la robinetterie de gaz (15).

11. Unité de vannes à gaz selon l'une quelconque des revendications 1 à 10, **caractérisée en ce que** l'entraîneur (7) et les vannes tout ou rien (2.1 - 2.9) sont réalisés de manière à ce qu'en fonction de la position de l'entraîneur (7), soit aucune vanne tout ou rien (2.1 - 2.9) soit exactement une vanne tout ou rien (2.1 - 2.9) soit ouverte ou que soit exactement deux vannes tout ou rien (2.1 - 2.9) soient ouvertes.

12. Unité de vannes à gaz selon la revendication 11, **caractérisée en ce que** l'entraîneur (7), en fonction d'un angle de la tige de prise (11) de l'unité de vannes à gaz (1), est disposé sur les vannes tout ou rien (2.1 - 2.9) disposées de manière circulaire.

13. Unité de vannes à gaz selon l'une quelconque des revendications 9 à 12, **caractérisée en ce que** l'entraîneur (7) est réalisé en tant qu'une partie d'un disque de commande (13) lequel présente un dispositif de transmission de couple (14) destiné à transmettre le couple de la tige de prise (11) de l'unité de vannes à gaz (1) sur le disque de commande (13).

14. Unité de vannes à gaz selon l'une quelconque des revendications 1 à 13, **caractérisée en ce que** des ouvertures dans une plaque de buse (24) de l'unité de vannes à gaz (1) présentent différents diamètres, la première jusqu'à la n^{ème} ouverture ayant une section transversale d'ouverture diminuant l'une après l'autre.

15. Robinetterie de gaz (15) comprenant au moins une unité de vannes à gaz (1) selon l'une quelconque des revendications 1 à 14.

16. Appareil à gaz, notamment four à gaz, lequel présente une robinetterie de gaz selon la revendication 15.
